Europäisches Patentamt

European Patent Office

Office européen des brevets

(11) Veröffentlichungsnummer: **0 367 899**
**A1**

(12) # EUROPÄISCHE PATENTANMELDUNG

(21) Anmeldenummer: **89110387.1**

(22) Anmeldetag: **08.06.89**

(51) Int. Cl.5: **G01N 1/20**

| | |
|---|---|
| Ein Antrag gemäss Regel 88 EPÜ auf Berichtigung liegt vor. Über diesen Antrag wird im Laufe des Verfahrens vor der Prüfungsabteilung eine Entscheidung getroffen werden (Richtlinien für die Prüfung im EPA, A-V, 2.2).<br><br>(30) Priorität: **05.11.88 DE 3837598**<br><br>(43) Veröffentlichungstag der Anmeldung: **16.05.90 Patentblatt 90/20**<br><br>(84) Benannte Vertragsstaaten:<br>**AT BE CH DE ES FR GB IT LI NL SE** | (71) Anmelder: **SCHWARTE WERK GMBH**<br>**Am Industriepark 2-10**<br>**D-2059 Büchen(DE)**<br><br>(72) Erfinder: **Mieth, Hans Otto, Dipl.-Ing.**<br>**Sandkrug 3**<br>**D-2058 Schnakenbek/Elbe(DE)**<br>Erfinder: **Pust, Manfred**<br>**Wagenfeldstrasse 52**<br>**D-4722 Ennigerloh(DE)** |

(54) **Verfahren und Vorrichtung zur Gewinnung von Flüssigkeitsproben aus einer Durchflussleitung.**

(57) Die Erfindung betrifft ein Verfahren und eine Vorrichtung zur Gewinnung von Flüssigkeitsproben aus einer von einem ersten zu einem zweiten Behälter führenden Durchflußleitung, bei denen jeweils während der Überführung eines zu prüfenden Flüssigkeitsvolumens ein dem überführten Gesamtvolumen repräsentatives Volumen aus der Durchflußleitung abgezweigt, gesammelt und am Ende der Überführung dem gesammelten Volumen ein Teilvolumen als Probe entnommen wird.

Durch ein derartiges Verfahren und eine Vorrichtung zu seiner Durchführung wird unter anderem sichergestellt, daß die Teilstromentnahme an beliebiger Stelle aus der Durchflußleitung erfolgen kann und in allen Phasen der Überführung des zu prüfenden Flüssigkeitsvolumens die Abzweigung eines repräsentativen Volumens gegeben ist.

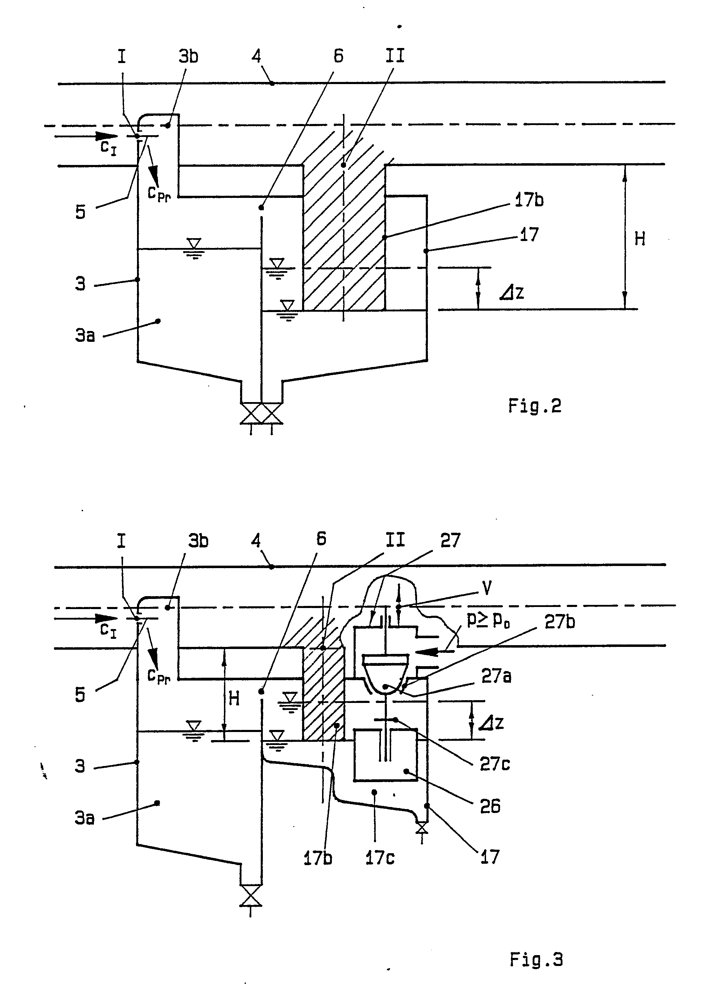

Dies wird unter anderem gemäß dem vorgeschlagenen Verfahren dadurch erreicht, daß das abgezweigte Volumen aus der Durchflußleitung in an sich bekannter Weise in vom Staudruck abhängiger Menge fortlaufend entnommen wird, und daß der statische Druck im abgezweigten Volumen dem statischen Druck an der und über die Flüssigkeit in der Nähe der Entnahmestelle unverzüglich angeglichen wird, und zwar ohne druckausgleichsbedingten Flüssigkeitstransport in das oder aus dem abgezweigten Volumen. Eine Vorrichtung zur Durchführung des Verfahrens sieht hierzu unter anderem vor, daß eine Druckausgleichsleitung (6) in den Kopfraum eines Behälters (17) ausmündet, und daß ein Tauchrohr (17b) vorgesehen ist, das in der Nähe der Entnahmestelle (I) an die Durchflußleitung (4) angeschlossen ist und in den unteren Bereich des Behälters (17) hinabreicht (Figur 3).

Fig.3

## Verfahren und Vorrichtung zur Gewinnung von Flüssigkeitsproben aus einer Durchflußleitung

Die Erfindung betrifft ein Verfahren und eine Vorrichtung zur Gewinnung von Flüssigkeitsproben aus einer Durchflußleitung nach dem Oberbegriff des Anspruchs 1.

Probenahmeverfahren der einleitend gekennzeichneten Gattung finden insbesondere dort Anwendung, wo sich einerseits die Merkmalswerte der zu überführenden und zu probenden Flüssigkeit während der Dauer der Überführung ändern oder wo sie signifikant schwanken und wo sich andererseits die Durchflußleistung in der Überführungsleitung verändert. In derartigen Anwendungsfällen kann eine Stichprobe oder eine in zeitlichen Abständen impulsweise aus der Durchflußleitung gewonnene Probe niemals eine repräsentative d.h. eine die wahren Merkmalswerte des zu probenden Flüssigkeitsvolumens enthaltende Probe darstellen.

Das vorstehende Problem stellt sich beispielsweise beim Einsammeln von Milchvolumina aus Behältnissen einer Vielzahl von Lieferanten in einen sogenannten Sammeltank eines Transportfahrzeuges, das die einzelnen Lieferanten anfährt und dort während der Überführung der bereitstehende Milch eine repräsentative Probe gewinnen soll. Dabei ist anzumerken, daß sich die Konzentration der Inhaltsstoffe in der bereitgestellten Milch unter Umständen über die Höhe des Behältnisses gesehen sehr stark ändert (z.B. Aufrahmung).

Ein Verfahren der einleitend gekennzeichneten Gattung, welches zur Gewinnung von Milchproben Anwendung findet, ist aus der DE-PS 12 24 522 bekannt. Es ist dadurch gekennzeichnet, daß die in ein Probeentnahmegefäß zu überführende Milch aus der Durchflußleitung in an sich bekannter Weise in vom Staudruck abhängiger Menge unter Gleichhaltung der statischen Druckverhältnisse an der Entnahmestelle und in dem Probeentnahmegefäß fortlaufend an verschiedenen Stellen des Durchflußquerschnittes entnommen und vor der Unterteilung in Probemenge und Restmenge durchmischt wird. In der Beschreibungseinleitung, Spalte 5, Zeilen 5 bis 7, wird hierzu erläuternd ausgeführt, daß unter Gleichhaltung der statischen Druckverhältnisse eine ständige Gleichhaltung des statischen Druckes an der Entnahmestelle und in dem Probeentnahmegefäß gemeint ist. Nach einer vorteilhaften verfahrenstechnischen Ausgestaltung soll die Milchentnahme unmittelbar vor dem Luftabscheider erfolgen, und es soll während der Zuführung von Milch zum Probeentnahmegefäß in diesem Gefäß der gleiche Druck wie im Luftabscheider aufrechterhalten werden. Zur Durchführung des Verfahrens ist eine Vorrichtung vorgesehen, die eine den statischen Druck an der Entnahmestelle und in dem Probeentnahmegefäß ausgleichende Einrichtung aufweist. Als gegenständliche Lösung wird hierzu vorgeschlagen, eine Druckausgleichsleitung zwischen dem Probeentnahmegefäß und einem unmittelbar hinter der Entnahmestelle der Durchflußleitung angeordneten Luftabscheider vorzusehen.

Wie man leicht zeigen kann, ist das im Kennzeichen des Anspruchs 1 des bekannten Verfahrens vorstehend angegebene Merkmal hinsichtlich der Druckbedingung notwendige Voraussetzung dafür, daß die Probenmilch exakt in vom Staudruck abhängiger Menge aus der Durchflußleitung abgezweigt werden kann. Insofern erfordert jegliche Probenahme, die es sich zum Ziel gesetzt hat, einen Volumenstrom in strenger Abhängigkeit vom Staudruck der in der Durchflußleitung vorliegenden Strömung abzuzweigen, die Einhaltung der vorgenannten Druckbedingung.

Das bekannte Verfahren und die Vorrichtung zu seiner Durchführung bieten jedoch als konkrete Lösung für die naheliegende, erforderliche Gleichhaltung der in Frage kommenden Drücke an, einen Druckausgleich zwischen dem Probeentnahmegefäß und dem Luftabscheider vorzusehen. Nachfolgend wird theoretisch noch dargelegt, daß eine Ausgleichung des statischen Druckes zwischen den in Frage kommenden Stellen des Probeentnahmesystems auf dem Umweg über den Luftabscheider in einer stationären Phase der Überführung des zu prüfenden Milchvolumens zwar ein dem jeweils überführten Gesamtvolumen repräsentatives Volumen ergibt, nicht jedoch im instationären Anlauf- und Auslaufzustand der Überführung. Insbesondere der instationäre Auslaufzustand beeinflußt die Zusammensetzung des abgezweigten Volumens entscheidend, da am Ende der Überführung in der Regel aufgerahmte, das heißt sehr fettreiche Milch überführt wird. Bekanntlich neigt Milch in Abhängigkeit von der Standzeit zur Aufrahmung, wobei die Milch im obersten Bereich einen Fettgehalt aufweist, der bis zum vierfachen des Durchschnittsfettgehaltes der Milch im vorliegenden Anlieferungsbehältnis betragen kann.

Da die Endphase der Milchüberführung jedoch mit Lufteinsaugen am Behälterboden und mit anhaltendem Luftschnorcheln verbunden ist, so daß sich der Annahmeschlauch und die sich daran anschließende Durchflußleitung von ihrem Eintritt bis zum Luftabscheider entleert, stellt diese Phase einen instationären Auslaufzustand für die Milchströmung in der Durchflußleitung und insbesondere an der Probeentnahmestelle dar. Mit beginnendem Lufteinsaugen breitet sich der Atmosphärendruck von der Eintrittsstelle in den Schlauch fortschreitend bis zur Probeentnahmestelle und danach weiter bis in den Luftabscheider hinein aus. Diesem gravierenden Druckanstieg muß ein unverzögerter Druckanstieg im Probeentnahmegefäß folgen, da sonst der relativ niedrige Staudruck von dem etwa eine Größenordnung größeren statischen Druck an der Entnahmestelle überlagert wird. Falls ein Druckausgleich zwischen der Entnahmestelle und dem Probeentnahmegefäß nicht oder nur unzureichend erfolgt, wie dies beim bekannten Verfahren und der Vorrichtung zu seiner Durchführung der Fall ist, gelangt in der Endphase der Überführung überproportional viel Milch in das Probeentnahmegefäß, die zudem noch einen Fettgehalt aufweist, der den mittleren Fettgehalt um ein mehrfaches übersteigt.

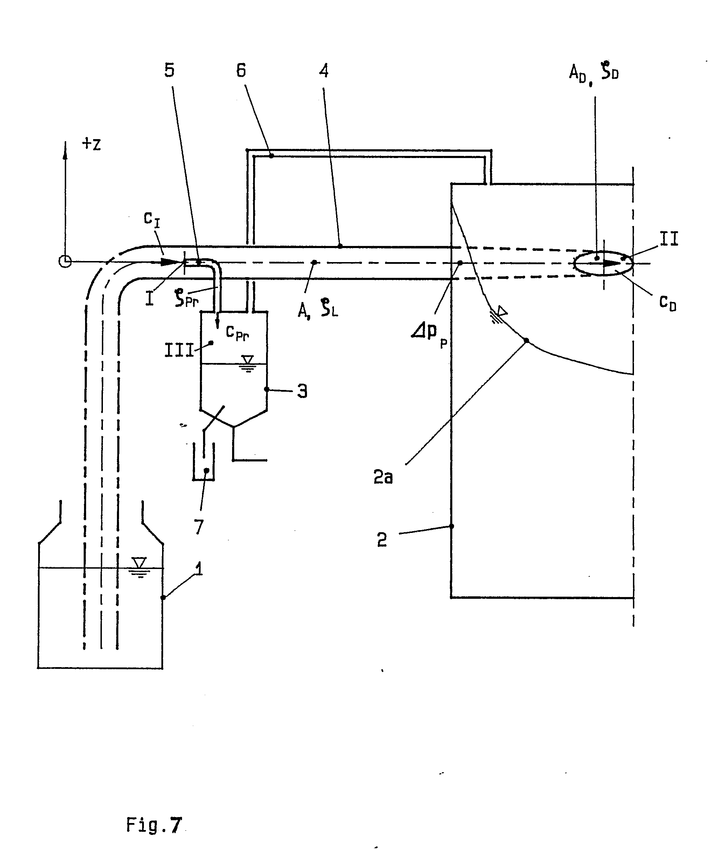

An Hand der Darstellung gemäß Figur 7, die eine Vorrichtung zur Durchführung des bekannten Verfahrens zeigt, sollen die strömungsmechanischen Zusammenhänge aufgezeigt und die Gründe dargelegt werden, warum in dieser oder einer anderen in gleicher Weise arbeitenden Vorrichtung nach dem Stand der Technik eine repräsentative Probenahme unter Einbeziehung der instationären An- und Auslaufzustände der Überführung des zu prüfenden Flüssigkeitsvolumens nur unzureichend gegeben ist.

Bei der Probeentnahmevorrichtung gemäß Figur 7, die in der DE-PS 12 24 522 ausführlich beschrieben ist, weise die Durchflußleitung 4 mit ihrem Querschnitt A zwischen den Stellen I und II einen Druckverlust auf, der durch den Druckverlustbeiwert $\zeta_L$ gegeben sei. Der Austrittsquerschnitt $A_D$ an der Stelle II weise einen Druckverlustbeiwert $\zeta_D$, die Zulaufleitung 5 zum Probenentnahmegefäß 3 weise einen Druckverlustbeiwert $\zeta_{Pr}$ auf. Die Höhenlage der Stellen I, II und III sei durch die Koordinate z gekennzeichnet. An der Stelle I liege die Geschwindigkeit $c_I$, an der Stelle II die Geschwindigkeit $c_D$ und an der Stelle III die Geschwindigkeit $c_{Pr}$ vor. Im Luftabscheider 2 rotiere die Flüssigkeit infolge des tangentialen Eintritts der Durchflußleitung 4, so daß der Eintrittsquerschnitt $A_D$ mehr oder weniger von Flüssigkeit überdeckt sei. Zur Überwindung der vor dem Austrittsquerschnitt $A_D$ befindlichen Flüssigkeitsschicht des Rotationsparaboloiden entstehe ein Druckverlust $\Delta p_p$, den die Strömung in der Durchflußleitung 4 aufzubringen hat. Es hat sich herausgestellt, daß ein gerade vom Rotationsparaboloiden überdeckter Austrittsquerschnitt der Schaumbildung an dieser Stelle vorbeugt bzw. entgegenwirkt, falls Flüssigkeiten überführt werden, die zur Schaumbildung neigen. Es sei die stationäre Überführungsphase der Flüssigkeit vom ersten Behälter 1 in den Luftabscheider 2 angenommen, wobei fortlaufend aus der Durchflußleitung 4 in vom Staudruck der dort vorliegenden Strömung abhängiger Menge ein Volumenstrom über die Zulaufleitung 5 zum Probenentnahmegefäß 3 entnommen werde.

Die Bernoullische Gleichung für stationäre Strömung zwischen den Stellen I und II einerseits und II und III andererseits liefert mit den vorgenannten Größen und mit der vorgenannten Druckbedingung (Druckausgleichsleitung 6 gemäß DE-PS 12 24 522 erzwingt Druckgleichheit der statischen Drücke $p_{stat}$ zwischen den Stellen II und III) die für das vorliegende Problem allgemein gültige Beziehung zwischen $c_{pr}$ und $c_I$:

$$ c_{Pr} = c_I \sqrt{\frac{\zeta_L + \zeta_D + (A_I/A_D)^2}{1 + \zeta_{Pr}}} + \sqrt{\frac{2g(z_I - z_{III})}{1 + \zeta_{Pr}}} + \sqrt{\frac{\frac{2}{\rho}\Delta p_p}{1 + \zeta_{Pr}}} \qquad (1) $$

Hierin bedeuten $\rho$ die Dichte der Flüssigkeit und g die Erdbeschleunigung.

Proportionalität zwischen $c_{pr}$ und $c_I$ ist nur gegeben, wenn der zweite und der dritte Term der Gleichung (1) null werden. In diesem Falle ist es dann bei stationärer Überführung gleichgültig, wie weit die Entnahmestelle I von der Austrittsstelle II im Luftabscheider 2 entfernt ist. Der zweite Term kann durch gleiche geodätische Höhen zwischen I und III zu null gemacht werden.

Der Druckverlust $\Delta p_p$ zur Überwindung des Rotationsparaboloiden ist in erster Näherung unabhängig von der Strömung in der Durchflußleitung 4 und nur abhängig von der Intensität der Rotation im Luftabscheider. So kann $\Delta p_p$ kurzzeitig erhalten bleiben, obwohl die Geschwindigkeit $c_I$ beispielsweise stark abnimmt (z.B. Verschluß oder Drosselung der Durchflußleitung). Es handelt sich demnach um einen durchsatzunabhängigen Druckverlust, der infolge seiner Rückwirkung auf die Entnahmestelle I und wegen des Druckausgleichs zwischen Stelle II und III zu einem entsprechend erhöhten Probestrom in der Zulaufleitung 5 führt, obgleich die Geschwindigkeit $c_I$ und damit der Volumenstrom in der Durchflußleitung 4 abgenommen haben.

Der letztgenannte Einfluß wird jedoch in seiner Wirkung auf die Teilstromentnahme, wie Messungen gezeigt haben, um ein mehrfaches vom Einfluß des Druckanstieges an der Entnahmestelle I beim Leersaugen des Schlauches und der Durchflußleitung 4 übertroffen. Dies gilt in besonderem Maße für Annahmesysteme, wie sie in der PS 12 24 522 beschrieben sind, bei denen die Entnahmestelle I in der Saugleitung einer Pumpe oder in der Durchflußleitung zu einem Luftabscheider, an dessen Kopfraum eine Unterdruckquelle angeschlossen ist. angeordnet ist. Mit fortschreitender Entleerung der Durchflußleitung gelangt der Atmosphärendruck an der Grenzfläche zwischen Luft und Flüssigkeit bis zur Entnahmestelle I. Im noch flüssigkeitsbeaufschlagten Restteil der Durchflußleitung nimmt zwar der Druck vom Atmosphärendruck gemäß dem Druckgradienten infolge Druckverlust ab, ohne daß ein Durchgriff des Atmosphärendruckes bzw. des sich ändernden Druckverlaufes durch den "Flüssigkeitspfropfen" hindurch in den Luftabscheider, und damit ein Anheben des dort herrschenden Druckes auf das angehobene Druckniveau in der Durchflußleitung 4 möglich ist. Daher kann der kontinuierlich bis zum Atmosphärendruck ansteigende statische Druck an der Entnahmestelle I auch nicht über die bekannte Druckausgleichs leitung 6 dem Kopfraum des Probenentnahmegefäßes 3 übermittelt werden. Den Auswirkungen der vorgenannten Phase des Druckanstieges an der Entnahmestelle I, die solange währt, wie die Schlauchentleerung bis zu dieser Stelle dauert, und die zu einer erheblichen Verfälschung der Probenmenge führt, kann daher durch das bekannte Verfahren und die vorgeschlagene Druckausgleichsleitung zwischen Probeentnahmegefäß 3 und Luftabscheider 2 nicht wirksam begegnet werden.

Es muß abschließend festgestellt werden, daß das bekannte Verfahren die für eine repräsentative Probeentnahme notwendige Bedingung hinsichtlich Druckgleichheit zwischen Entnahmestelle und Probenentnahmegefäß zwar fordert, sie aber in instationären Phasen der Flüssigkeitsüberführung mit den angegebenen Mitteln nicht zu lösen vermag.

Ausgehend vom aufgezeigten Stand der Technik und seinen Nachteilen liegt der vorliegenden Erfindung die Aufgabe zugrunde, ein Verfahren und eine Vorrichtung zur Gewinnung von Flüssigkeitsproben zu schaffen, bei dem an beliebiger Stelle aus einer von einem ersten zu einem zweiten Behälter führenden Durchflußleitung in allen Phasen der Überführung des zu prüfenden Flüssigkeitsvolumens in Abhängigkeit vom Staudruck der Strömung in der Durchflußleitung ein dem jeweils überführten Gesamtvolumen repräsentatives Volumen abgezweigt wird.

Die Aufgabe wird durch Anwendung der Kennzeichenmerkmale des Anspruchs 1 gelöst. Vorteilhafte Ausgestaltungen des erfindungsgemäßen Verfahrens sind in den abhängigen Unteransprüchen 2 bis 10 beschrieben, während vorteilhafte Ausführungsformen der Vorrichtung zur Durchführung des vorgenannten Verfahrens Gegenstand der abhängigen Ansprüche 11 bis 19 sind.

Das erfindungsgemäße Verfahren stellt die Teilstromentnahme in strenger Abhängigkeit vom Staudruck der in der Durchflußleitung vorliegenden Strömung dadurch her, daß der Druckausgleich zwischen dem statischen Druck im abgezweigten Volumen und dem statischen Druck an der Entnahmestelle über die Flüssigkeit in der Nähe der Entnahmestelle erfolgt. Ausgehend von der für das vorliegende Problem allgemein gültigen Beziehung (Gleichung 1), ist selbstverständlich gewährleistet, daß der geodätische Höhenunterschied zwischen der Entnahmestelle I und der Stelle III im Kopfraum des Probenvorlaufgefäßes einen gegenüber dem Staudruck vernachlässigbaren kleinen Wert annimmt. Der dritte Term der Gleichung 1 spielt bei der erfindungsgemäß vorgeschlagenen Lösung keine Rolle, da die Druckausgleichsstelle stets vor und niemals hinter dem Rotationsparaboloiden des Luftabscheiders 3 angeordnet ist.

Die Vorteile des vorgeschlagenen Verfahrens liegen jedoch in der Hauptsache in der Realisierung der staudruckabhängigen Teilstromentnahme auch während des instationären Auslaufzustandes der Überführung. Dies gelingt dadurch, daß die Differenz der statischen Drücke an der Entnahmestelle und im abgezweigten Volumen in eine zur Druckangleichung nutzbare Stellgröße abgebildet wird. Sofern diese Stellgröße die Änderung der Spiegeldifferenz einer Flüssigkeitsoberfläche ist, kann diese Flüssigkeitsoberfläche ein erfindungsgemäß vorgesehenes Gasvolumen derart komprimieren oder dekomprimieren, daß die angestrebte Druckangleichung zwischen dem statischen Druck an der Entnahmestelle und dem statischen Druck im abgezweigten Volumen dadurch hergestellt wird.

Gemäß einer vorteilhaften Vorrichtung zur Durchführung des erfindungsgemäßen Verfahrens ist vorgesehen, die Änderung der Spiegeldifferenz der Flüssigkeitsoberfläche über einen Schwimmer abzubilden, wobei dieser eine auf das abgezweigte Volumen wirkende Druckquelle steuert. Eine andere Vor richtung zur Durchführung des erfindungsgemäßen Verfahrens sieht vor, eine auf das abgezweigte Volumen wirkende Druckquelle über die Auslenkung einer Membrane zu steuern, welche einerseits vom statischen Druck der Flüssigkeit an der Entnahmestelle und andererseits vom statischen Druck im abgezweigten Volumen beaufschlagt ist.

Es erweist sich im Zusammenhang mit der Entleerung des Probenvorlaufgefäßes als vorteilhaft, wenn der statische Druck an der Entnahmestelle durch einen wertmäßig gleichen statischen Druck an einer geodätisch tieferliegenden Stelle stromabwärts substituiert wird. Über diese tieferliegende Stelle läßt sich dann das Restvolumen, welches nach Abzweigung eines Teilvolumens als Probe von dem abgezweigten Volumen verbleibt, problemlos in die Durchflußleitung abführen. Als Bemessungskriterium für den geodätischen Höhenunterschied muß gelten, daß bei Nenndurchflußleistung der Druckverlust in der Durchflußleitung zwischen der Entnahmestelle und der tieferliegenden Stelle durch den Druckgewinn infolge des geodätischen Höhenunterschiedes gerade kompensiert wird.

Die Druckangleichung über ein zwischen der Flüssigkeitsoberfläche und dem abgezweigten Volumen angeordnetes Gasvolumen kann noch in besonders wirksamer Weise dadurch unterstützt werden, daß der der Flüssigkeit beim Einströmen in das Gasvolumen innewohnende Strömungsimpuls ausgenutzt wird, um kurzzeitig einen Druckausgleich zwischen dem Druck im Gasvolumen und der Atmosphäre herzustellen. Unter bestimmten Bedingungen kann es auch von Vorteil sein, wenn die das Gasvolumen verdrängende Flüssigkeit durch Auftriebswirkung an einem in ihm eintauchenden Körper einen Druckausgleich zwischen dem Druck im Gasvolumen und der Atmosphäre herstellt. In diesem Falle wird der bis zum Atmosphärendruck ansteigende statische Druck an der Entnahmestelle nahezu unverzüglich kompensiert.

Bei einer streng staudruckabhängigen Teilstromentnahme steht als treibende Druckdifferenz zwangsläufig nur der im Vergleich zum statischen Druck an der Entnahmestelle relativ kleine Staudruck zur Verfügung. Da, entsprechend den Erfordernissen einer repräsentativen Probenahme, das Teilungsverhältnis zwischen Teilstrom und Gesamtstrom mit einem großen Stellverhältnis einstellbar sein soll, damit sowohl sehr kleine als auch sehr große Flüssigkeitsmengen geprobt werden können, hat man bislang die unterschiedlichen Teilungsverhältnisse durch Drosselung eines Durchtrittsquerschnittes realisiert. Kleinste Teilungsverhältnisse führten dabei zu sehr kleinen Öffnungsquerschnitten, die verstopfungsanfällig sind und unter ungünstigen Probenahmebedingungen nicht immer den wahren Merkmalswert der überführten Flüssigkeit erfassen können.

Mit einer vorteilhaften Ausgestaltung des vorgeschlagenen Verfahrens ist es nun erstmals möglich, über den Staudruck selbst kleinste Volumenströme über betriebssichere und noch ausreichend bemessene Durchtrittsquerschnitte des Probenehmers an der Entnahmestelle abzuzweigen. Dies gelingt zum einen durch Aufteilung eines Teilstromes, der entweder gleichberechtigt oder ungleichberechtigt durch strömte Teilquerschnitte eines Gesamtquerschnittes durchsetzt oder durch Neigung eines vom erzeugten Volumenstrom durchsetzten Gesamtquerschnittes zur Strömungsrichtung eines Teilstromes in der Durchflußleitung. Im Gegensatz zu den bekannten Vorrichtungen bleiben bei dem vorgeschlagenen Verfahren die Durchtrittsquerschnitte unverändert; sie werden lediglich durch ihre erfindungsgemäße Handhabung unterschiedlich wirksam durchströmt. Im erstgenannten Fall wird ein Gesamtquerschnitt in zwei Teilquerschnitte aufgeteilt, wobei nach wie vor beide Teilquerschnitte durchströmt werden. Um das Stellverhältnis weiter zu erhöhen, ist erfindungsgemäß vorgesehen, daß der für das abgezweigte Volumen bestimmte Teilquerschnitt nicht nur durch Änderung der Lage des Mengenteilers reduziert wird, sondern daß er sich dabei darüber hinaus in einen Strömungsbereich verlagert, in dem eine zunehmend weniger wirksame Durchströmung gegeben ist. Der Durchtrittsquerschnitt besteht demzufolge aus vielen ungleichberechtigt durchströmten, wahlweise über den Mengenteiler einstellbaren Teilquerschnitten, ohne daß dabei eine Drosselung des den Gesamtquerschnitt durchsetzenden Teilstromes erfolgt.

Das andere vorgeschlagene Verfahren gemäß der Erfindung reduziert den abgezweigten Volumenstrom dadurch, daß die Neigung eines Durchtrittsquerschnittes zur Strömungsrichtung eines Teilstromes der Durchflußleitung verändert wird. Auch hierbei erfolgt keine Drosselung des Durchtrittsquerschnittes, sondern eine mehr oder weniger wirksame Durchströmung des vollen Querschnittes unter dem Einfluß des vorliegenden Staudruckes.

Zur Durchführung des neuen Verfahrens geht die Erfindung von einer Vorrichtung aus, bei der ein Probenvorlaufgefäß, das über eine Zulaufleitung, die mit einer als Pitotrohr ausgebildeten Eintrittsöffnung versehen ist, mit der Durchflußleitung in Verbindung steht, und das eine im Kopfraum des Probenvorlaufgefäßes ausmündende Druckausgleichsleitung aufweist. Erfindungsgemäß ist nun vorgesehen, die Druckausgleichsleitung andererseits in der Nähe der Entnahmestelle an die Durchflußleitung anzuschließen. Durch diese Maßnahme ist die Bedingung für eine streng mengenproportionale und damit repräsentative Teilstromentnahme mit größtmöglicher Genauigkeit gegeben. Die vorgenannte Gleichung 1 reduziert sich auf den ersten rechtsseitigen Term, da zum einen die Bedingung gleicher geodätischer Höhe für die Stellen I und III einfacher als bei Vorrichtungen nach dem Stand der Technik zu erfüllen ist und zum anderen eine durch den Rotationsparaboloiden bedingte Druckdifferenz entfällt. Da der Druckausgleich durch die Flüssigkeit in der Nähe der Entnahmestelle erfolgt, kann man von Gleichheit der in Frage kommenden Durchtrittsquerschnitte ausgehen, so daß der Druckverlustbeiwert infolge Querschnittsveränderung und jener infolge Leitungsverlust entfällt. Gleichung 1 reduziert sich somit auf die folgende Proportionalitätsbeziehung zwischen dem Hauptstrom in der Durchflußleitung und dem Teilstrom zum Probenvorlaufgefäß:

$$c_{pr} = c_{I} \sqrt{\frac{1}{1 + \mathscr{S}_{Pr}}} \qquad (1a)$$

Um die sich im instationären Auslaufzustand der Überführung einstellende Differenz der statischen Drücke an der Entnahmestelle und im abgezweigten Volumen in eine nutzbare Stellgröße abbilden zu können, sieht eine Ausgestaltung der Vorrichtung gemäß der Erfindung vor, daß die Druckausgleichsleitung in den Kopfraum eines Behälters ausmündet. und daß ein Tauchrohr vorgesehen ist, das in der Nähe der Entnahmestelle an die Durchflußleitung angeschlossen ist und in den unteren Bereich des Behälters hinabreicht. Über das vorgeschlagene Tauchrohr führt jede Druckdifferenz zu einem Flüssigkeitstransport in oder aus dem Behälter, wodurch das Gasvolumen, welches oberhalb der Flüssigkeitsoberfläche angeordnet ist, komprimiert oder dekomprimiert wird. Dadurch ist eine unverzügliche Druckangleichung zwischen dem statischen Druck an der Entnahmestelle und jenem im abgezweigten Volumen gegeben. Die Änderung der Spiegeldifferenz im vorgenannten Behälter läßt sich, wie dies eine andere Ausgestaltung der Vorrichtung gemäß der Erfindung vorsieht, über einen Schwimmer erfassen, der eine auf das abgezweigte Volumen wirkende Druckquelle steuert. Bei einer anderen Ausgestaltung der Vorrichtung gemäß der Erfindung bewirkt die Druckdifferenz eine Auslenkung einer Membrane, die dann in gleicher Weise eine auf das abgezweigte Volumen wirkende Druckquelle steuert.

Die Druckangleichung zwischen dem statischen Druck an der Entnahmestelle und dem statischen Druck im Kopfraum des Probenvorlaufgefäßes wird unverzüglich vollzogen, wenn, wie dies eine weitere Ausführungsform der Vorrichtung gemäß der Erfindung vorsieht, die Druckausgleichsleitung auf der Seite zur Durchflußleitung in den Kopfraum eines Behälters ausmündet, der an seiner Unterseite mit einem großzügig bemessenen Anschluß an die Durchflußleitung angeschlossen ist. Der apparative Aufwand wird in diesem Zusammenhang dadurch reduziert, daß das Probenvorlaufgefäß und der Behälter in einem gemeinsamen Behältermantel angeordnet sind und ihre gegenseitige Trennung lediglich über einen Trennboden erfolgt.

Um negativen Auswirkungen auf die mengenproportionale Teilstromentnahme durch sehr starken Anstieg des statischen Druckes an der Entnahmestelle im instationären Auslaufzustand der Überführung besonders schnell und nachhaltig entgegenzuwirken, wird der Kopfraum des Behälters über ein Ventil mit der Atmosphäre verbunden. Dieses Ventil kann entweder von der mit der Entnahmestelle kommunizierenden Flüssigkeit schwimmergesteuert oder durch den dieser im Ausgleichsfalle innewohnenden Strömungsimpuls gesteuert sein.

Das erfindungsgemäße Verfahren und die Vorrichtung zu seiner Durchführung werden anhand von Ausführungsbeispielen in den nachfolgend erläuterten Figuren der Zeichnung im einzelnen näher beschrieben.

Neben Figur 7, die eine bekannte Vorrichtung zeigt, und die lediglich zur Darstellung des Standes der Technik und seiner Nachteile in der Beschreibungseinleitung herangezogen wurde, zeigen

Figuren 1a bis 1c in schematischer Darstellung prinzipielle Ausführungsformen der Vorrichtung gemäß der Erfindung;

Figur 2 eine Vorrichtung gemäß Figur 1b, wobei die Druckangleichung über ein Gasvolumen erfolgt;

Figur 3 eine weitere Ausgestaltung der Vorrichtung gemäß Figur 2, wobei die Druckangleichung über ein schwimmergesteuertes Belüftungsventil erfolgt;

Figuren 4 und 4a in schematischer Darstellung eine Vorrichtung gemäß Figur 1b bzw. 1c mit einer membrangesteuerten Einrichtung zum Druckausgleich;

Figuren 5a bis 5d schematische Darstellungen durch weitere Ausgestaltungen der Vorrichtung gemäß Figur 1c, mit einem Behälter zur Intensivierung des Druckausgleichs und

Figuren 6 bis 6d schematische Darstellungen der möglichen Anordnung der erfindungsgemäßen Vorrichtung an beliebiger Stelle innerhalb eines Flüssigkeitsannahmesystems.

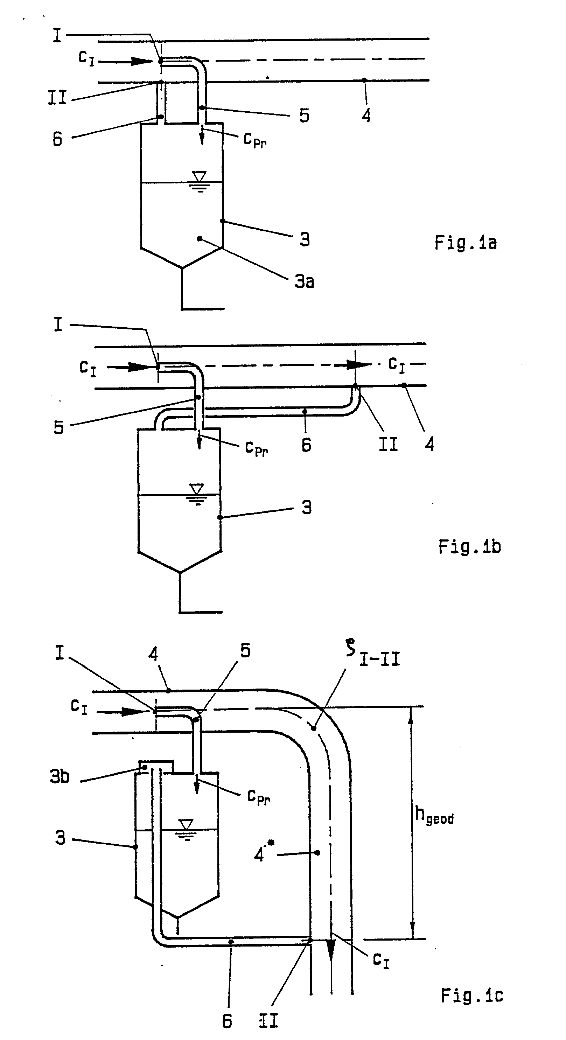

Die Figuren 1a bis 1b zeigen Grundsatzlösungen der erfindungsgemäßen Vorrichtung. Eine Durchflußleitung 4 (Figur 1a) wird von einer Flüssigkeitsströmung mit der Geschwindigkeit $c_I$ durchströmt. An einer Entnahmestelle I befindet sich die Eintrittsöffnung einer Zulaufleitung 5, die in den Kopfraum eines Probenvorlaufgefäßes 3 führt. Sie ist an der Entnahmestelle I als Pitotrohr ausgebildet. Eine Druckausgleichsleitung 6 ist einerseits in der Nähe der Entnahmestelle I an die Durchflußleitung 4 und andererseits an den Kopfraum des Probenvorlaufgefäßes 3 angeschlossen. Sie mündet senkrecht zur Strömungsrichtung in der Durchflußleitung in diese ein, so daß an der Anschlußstelle II der statische Druck an der Entnahmestelle I wirkt. Durch die Druckausgleichsleitung 6 wird der statische Druck im Probenvorlaufgefäß 3 dem statischen Druck an der Entnahmestelle I angeglichen. Da an der Entnahmestelle I der Gesamtdruck der Strömung, der sich aus dem statischen Druck und dem Staudruck zusammensetzt, herrscht, unterliegt die Zulaufleitung 5 insgesamt einer Druckdifferenz, die dem Staudruck der Strömung in der Durchflußleitung 4 entspricht. Der Staudruck ist somit die treibende Druckdifferenz für das über die Zulaufleitung 5 in das Probenvorlaufgefäß mit der Geschwindigkeit $c_{Pr}$ abgezweigte Flüssigkeitsvolumen 3a. Die dargestellte Anordnung ergibt eine Teilstromentnahme in das Probenvorlaufgefäß 3, die streng proportional zum Volumenstrom in der Durchflußleitung 4 ist.

Figur 1b zeigt eine Anordnung, bei der sich die Anschlußstelle II der Druckausgleichsleitung 6 an die Durchflußleitung 4 in einem Abstand stromabwärts von der Entnahmestelle I befindet. Der Fehler, den diese Anordnung hinsichtlich des Druckausgleichs zwischen der Entnahmestelle I und dem Kopfraum des Probenvorlaufgefäßes 3 mit sich bringt, besteht im geringfügigen Druckverlust zwischen den Stellen I und II. Andererseits hat diese Anordnung den Vorteil, daß sich die Strömungsvorgänge und die Strömungsfelder an den Stellen I und II nicht gegenseitig beeinflussen, und daß sich aus dieser Grundsatzlösung Ausgestaltungen ableiten lassen, die die gestellte Aufgabe in hervorragender Weise lösen.

In Figur 1c ist eine weitere Anordnung der Vorrichtung dargestellt, bei der die Druckausgleichsleitung 6 an einen abwärts gerichteten Leitungsteil 4* der Durchflußleitung 4 angeschlossen ist. Dabei wird der geodätische Höhenunterschied so gewählt, daß er bei Nennförderleistung dem Druckverlust $\zeta_{I-II}$ der Durchflußleitung 4 zwischen der Entnahmestelle I und der Anschlußstelle II entspricht. Die Druckausgleichsleitung 6 verläuft von der Anschlußstelle II aufsteigend bis in einen Dom 3b oberhalb des Kopfraumes des Probenvorlaufgefäßes 3. Durch die letztgenannte Anordnung besitzt die Druckausgleichsleitung 6 auch die Funktion einer Füllstandsbegrenzung für das Probenvorlaufgefäß 3.

Die Vorrichtung gemäß Figur 2 stellt eine Weiterentwicklung der Vorrichtung gemäß Figur 1b dar. Im Unterschied zur letztgenannten Vorrichtung ist zusätzlich ein Behälter 17 vorgesehen, in dessen Kopfraum die Druckausgleichsleitung 6 ausmündet. Ein Tauchrohr 17b ist in der Nähe der Entnahmestelle 1 an die Durchflußleitung 4 angeschlossen und reicht in den unteren Bereich des Behälters 17 hinab. Ein Teil des Kopfraumes des Probenvorlaufgefäßes 3 reicht in die Durchflußleitung 4 hinein und ist somit Teil des Probenehmers mit der Zulaufleitung 5. Eine Druckdifferenz zwischen der Entnahmestelle I und dem abgezweigten Volumen 3a bewirkt einen Zustrom oder eine Abführung von Flüssigkeit in den bzw. aus dem Behälter 17. Die sich dadurch ergebende Änderung der Spiegeldifferenz $\Delta z$ führt zu einer Kompression bzw. Dekompression des Gasvolumens, welches sich oberhalb der Flüssigkeit im Probenvorlaufgefäß 3 und im Behälter 17 befindet. Der abgezweigte Volumenstrom muß über die Zulaufleitung 5 gegen einen statischen Druck austreten, der durch die Höhe H der Flüssigkeit im Tauchrohr 17b bestimmt wird. Der aus der Höhe H resultierende Druck verfälscht geringfügig die staudruckabhängige Probenahme. Die Höhe H kann jedoch so klein bemessen werden, daß sie im Verhältnis zur Straudruckhöhe vernachlässigt werden kann. In der Phase der stationären Flüssigkeitsüberführung in der Durchflußleitung 4 befindet sich der Flüssigkeitsspiegel im Behälter 17 an der Unterkante des Tauchrohres 17b.

Die Vorrichtung gemäß Figur 3 entspricht in wesentlichen Teilen jener gemäß Figur 2. Auch bei dieser Vorrichtung wird die Änderung der Spiegeldifferenz in dem Behälter 17 genutzt, um die geforderte Druckangleichung zu erreichen. Allerdings erfolgt die Druckangleichung nicht mehr über das vorgenannte Gasvolumen, sondern über ein schwimmergesteuertes Belüftungsventil 27, welches eine auf das abgezweigte Volumen wirksame Druckquelle steuert. Der Behälter 17 kann wesentlich kleiner sein als der Behälter 17 bei der Vorrichtung gemäß Figur 2, da er lediglich soviel Flüssigkeitsvorlage 17c aufweisen muß, daß ein Schwimmer 26, der das Belüftungsventil 27, bestehend aus einem Schließglied 27a, einem Ventilsitz 27b und einem an einer Ventilstange angeordneten Anschlag 27c, in allen Betriebsfällen ausreichend Auftrieb erfährt. Das Schließglied 27a und der Ventilsitz 27b sind so ausgebildet, daß sie unter dem Schwimmerhub als Regelventil mit einer gewünschten Regelcharakteristik arbeiten. Damit geringfügige Druckschwankungen sich nicht unmittelbar in einem Eingriff des Belüftungsventils niederschlagen, besitzt der Schwimmer 26 in seiner normalen Betriebslage ein gewisses Spiel gegenüber der Stange des Belüftungsventils 27, das durch den Anschlag 27c bestimmt wird.

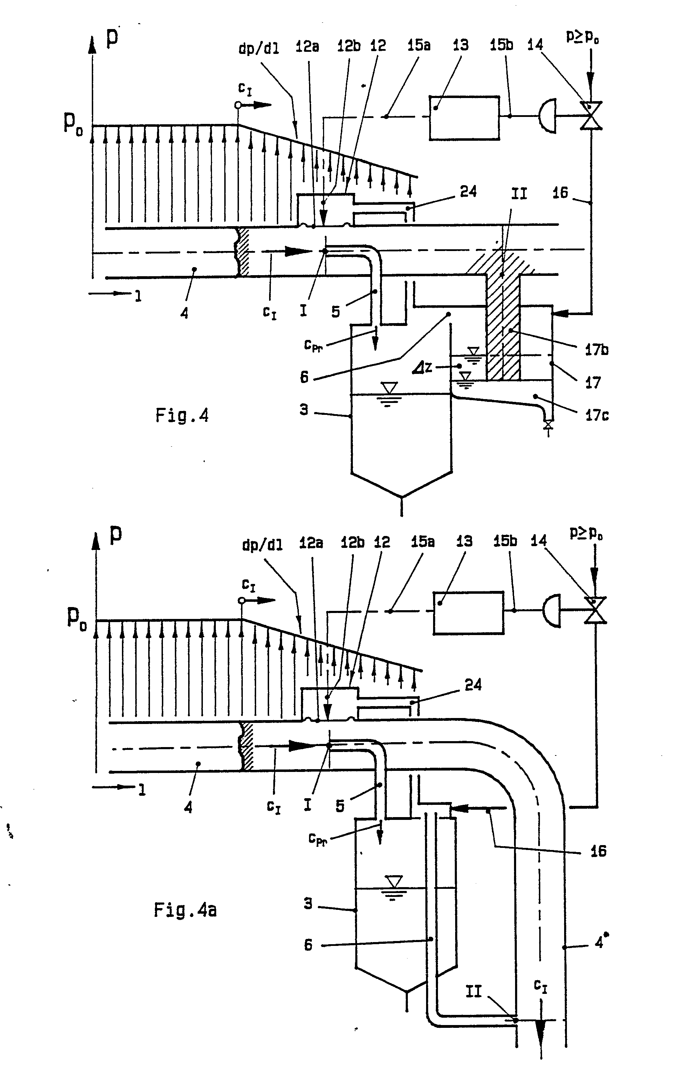

In Figur 4 ist eine erfindungsgemäße Vorrichtung gezeigt, die eine fortentwickelte Ausgestaltung der Vorrichtung gemäß Figur 1b darstellt. Im Bereich der Entnahmestelle I ist ein Druckmeßgerät 12 mit einer Membrane 12a und einer deren Auslenkung erfassenden Vorkehrung 12b angeordnet, das eine an den Kopfraum des Probenvorlaufgefäßes 3 angeschlossene Druckquelle 14 steuert. Die Membrane 12a ist einerseits vom statischen Druck der Flüssigkeit an der Entnahmestelle I und andererseits vom statischen Druck über dem abgezweigten Volumen im Probenvorlaufgefäß 3 mittels einer zweiten Druckausgleichsleitung 24 beaufschlagt. Somit kann in Abhängigkeit von der sich zwischen der Entnahmestelle I und dem Probenvorlaufgefäß 3 im instationären Auslaufzustand der Überführung unter Umständen einstellenden statischen Druckdifferenz die Druckangleichung über die Druckquelle 14 forciert werden. Die Auslenkung der Membrane 12a wird über eine Signalleitung 15a einem Steuergerät 13 übermittelt, welches über eine zweite Signalleitung 15b die Druckquelle 14 ansteuert.

Linksseitig von der Entnahmestelle I ist in Figur 4 ein Druckverlauf p(1) dargestellt, wie er sich beispielsweise bei einer Schlauchentleerung bzw. Entleerung der Durchflußleitung vom Eintritt in den Schlauch bzw. die Durchflußleitung und in Richtung der Entnahmestelle I mit der Geschwindigkeit $c_i$ ausbreitet. Links von der Flüssigkeitsgrenzfläche befindet sich der Atmosphärendruck $p_0$, während sich rechts davon ein Druckgradient dp/dl einstellt, wie er aus dem Druckverlust des in der Durchflußleitung 4 strömenden Volumenstromes resultiert. Man erkennt, daß der Druck an der Entnahmestelle I von einem relativ niedrigen Druck im stationären Zustand der Überführung bis zum Atmosphärendruck $p_0$ anwächst. Für den Fall, daß die Schlauchentleerung zu einem Zeitpunkt eintritt, an dem sich im Probenvorlaufgefäß 3 oberhalb des abgezweigten Volumens ein Luftvolumen befindet, würde die Druckerhöhung an der Entnahmestelle I einen druckausgleichsbedingten Flüssigkeitstransport aus der Durchflußleitung 4 und über die Zulaufleitung 5 in das Probenvorlaufgefäß 3 bewirken. Die bis zu diesem Zeitpunkt staudruckabhängige Teilstromentnahme würde von einem infolge der statischen Druckdifferenz zusätzlichen Ausgleichsstrom überlagert, so daß eine Mengenproportionalität zwischen dem Teilstrom und dem Volumenstrom in der Durchflußleitung 4 nicht mehr gegeben ist. Die gezeigte Vorrichtung steuert dem vorgenannten Effekt nun dadurch entgegen, daß die Auslenkung der Membrane 12a benutzt wird, um, wie dies die Vorrichtung gemäß Figur 4 zeigt, eine Druckquelle 14 derart zu steuern, daß unverzüglich mit dem Eintritt des Ereignisses Druckmittel über die Belüftungsleitung 16 dem Probenvorlaufgefäßes 3 zugeführt wird. Die Funktion des Behälters 17 und seines an die Durchflußleitung 4 angeschlossenen Tauchrohres 17b wurde bereits bei den Vorrichtungen gemäß Figuren 2 und 3 erläutert

Die Vorrichtung gemäß Figur 4a entspricht in ihren wesentlichen Teilen jener gemäß Figur 4, wobei das Probenvorlaufgefäß 3 nach der Grundsatzlösung gemäß Figur 1c ausgebildet und angeordnet ist. An Stelle des Tauchrohres 17b der Vorrichtung gemäß Figur 4 tritt bei der Vorrichtung gemäß Figur 4a die Druckausgleichsleitung 6, die an den abwärts gerichteten Leitungsteil 4* angeschlossen ist, einen aufsteigenden Verlauf aufweist und bis in den Kopfraum des Probenvorlaufgefäßes 3 hineinreicht.

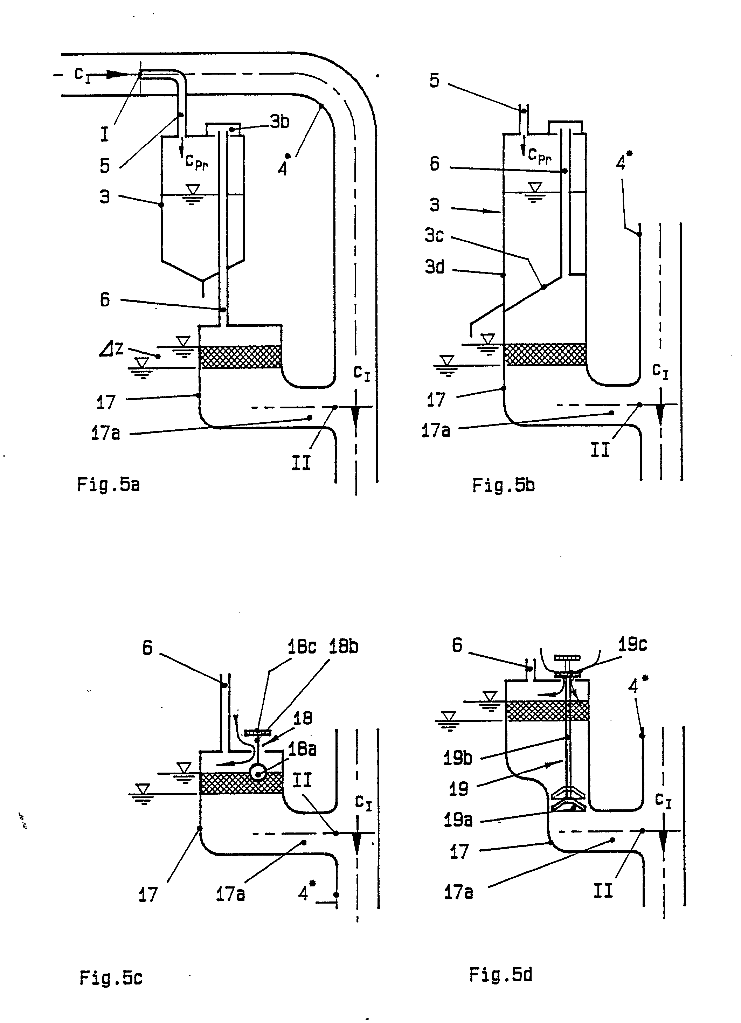

Figur 5a zeigt eine weitere Ausgestaltung der Vorrichtung gemäß Figur 1c. Die Druckausgleichsleitung 6 ist nicht, wie bei der Vorrichtung gemäß Figur 1c, über die Anschlußstelle II an die Durchflußleitung 4* unmittelbar angeschlossen, sondern es ist ein Behälter 17 zwischengeschaltet, in dessen Kopfraum die Druckausgleichsleitung 6 einmündet und der an seiner Unterseite mit einem Anschluß 17a mit der Durchflußleitung 4* in Verbindung steht. Falls nun der vorstehend geschilderte Fall eines Druckanstiegs an der Entnahmestelle I eintritt, teilt sich dieser Druckanstieg mit einer geringen zeitlichen Verzögerung der mit der Entnahmestelle I kommunizierenden Flüssigkeit an der Stelle II mit, wodurch diese teilweise über den Anschluß 17a in den Behälter 17 einströmt und dort einen Anstieg des Flüssigkeitsspiegels um die Höhendifferenz $\Delta z$ bewirkt. Durch diesen Anstieg wird Luftvolumen über die Druckausgleichsleitung 6 in den Kopfraum des Probenvorlaufgefäßes 3 verdrängt, so daß eine Angleichung des statischen Druckes an den statischen Druck im Bereich der Entnahmestelle I erfolgt.

In Figur 5b ist eine abgewandelte Ausführungsform der Vorrichtung gemäß Figur 5a gezeigt, bei der das Probenvorlaufgefäß 3 und der Behälter 17 in einem gemeinsamen Behältermantel 3d angeordnet sind und ihre gegenseitige Trennung über einen Trennboden 3c erfolgt.

Bei der Vorrichtung gemäß Figur 5c weist der Behälter 17 zusätzlich ein schwimmergesteuertes Ventil 18 auf, dessen Schwimmer 18a bei Anstieg der in den Behälter 17 einströmenden Flüssigkeit angehoben wird, so daß er über eine Stange 18b ein Schließglied 18c von seiner Sitzfläche anhebt, wodurch ein Durchgriff des Atmosphärendruckes $p_0$ in den Behälter 17 und somit über die Druckausgleichsleitung 6 in den Kopfraum des Probenvorlaufgefäßes 3 gegeben ist. Solange die Flüssigkeit im Behälter 17 das gezeigte Niveau beibehält, bleibt das schwimmergesteuerte Ventil 18 geöffnet.

Im Gegensatz zur Vorrichtung gemäß Figur 5c weist die Vorrichtung gemäß Figur 5d ein vom Strömungsimpuls der in den Behälter 17 eintretenden Flüssigkeit gesteuertes Ventil 19 auf, welches aus einem Stauteller 19a, einer Stange 19b und einem Schließglied 19c besteht, und das nach Abklingen des Strömungsimpulses selbsttätig in seine Schließlage zurücksinkt. Solange das Ventil 19 in seiner Öffnungsstellung verharrt, ist der Kopfraum des Behälters 17 und damit auch der Kopfraum des Probenvorlaufgefäßes 3 mit der Atmosphäre verbunden. Es ist nun in diesem Zustand durchaus denkbar, daß der statische Druck an der Entnahmestelle I geringer ist als der statische Druck im Probenvorlaufgefäß 3, da hier durch die Belüftungsmaßnahme kurzzeitig Atmosphärendruck $p_0$ herrscht. Da aber die Stellen I und II miteinander kommunizieren, und die statische Druckdifferenz zwischen ihnen relativ gering ist, wird eine Abströmung von Flüssigkeit aus dem Behälter 17 über die Anschlußstelle II in die Durchflußleitung 4* einsetzen, so daß bei geschlossenem Ventil 19 eine Druckabsenkung und ein Gleichgewicht der Drücke zwischen der Entnahmestelle I und dem Kopfraum des Probenvorlaufgefäßes 3 herbeigeführt wird.

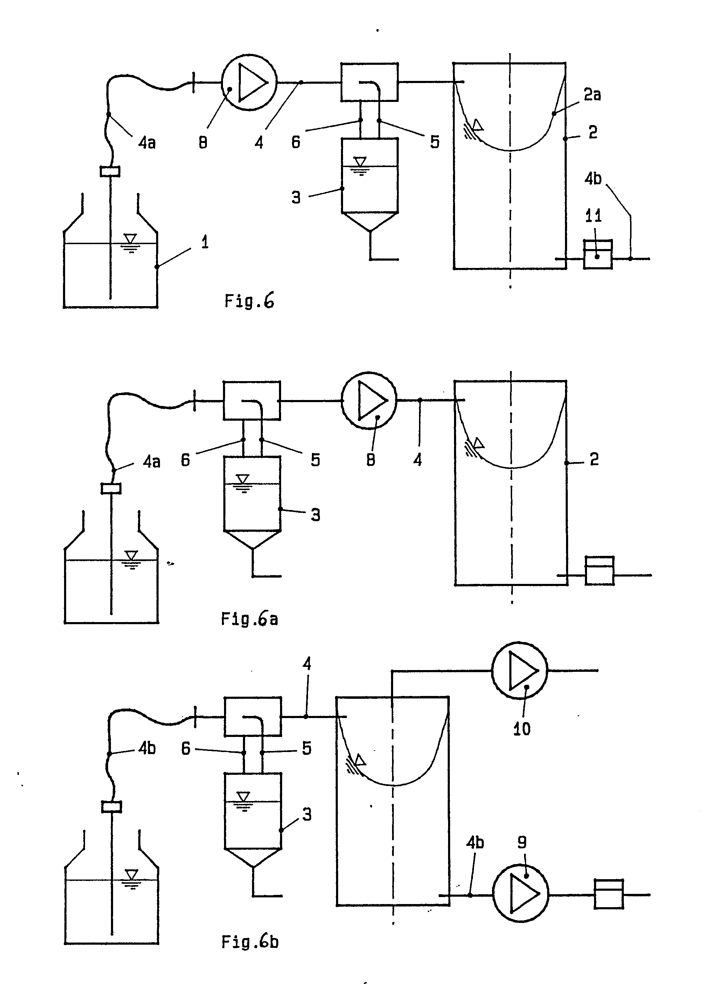

Die Figuren 6, 6a und 6b zeigen die Möglichkeiten hinsichtlich der prinzipiellen Anordnung der erfindungsgemäßen Vorrichtung an beliebiger Stelle in der Durchflußleitung 4 eines Flüssigkeitsannahme- und Meßsystems, z.B. für Milch. Da die Teilstromentnahme aus der Durchflußleitung 4 allein in Abhängigkeit von dem dort herrschenden Staudruck erfolgt, ist sie in jedem Falle unabhängig von dem jeweils vorliegenden statischen Druckniveau. In Figur 6 befindet sich die Vorrichtung zwischen einer ersten Pumpe 8 und einem Luftabscheider 2. Die Pumpe 8 fördert die Flüssigkeit aus einem ersten Behälter 1 über einen Schlauch 4a in den Luftabscheider 2.

Bei der Anordnung gemäß Figur 6a befindet sich die erfindungsgemäße Vorrichtung auf der Saugseite der ersten Pumpe 8.

In Figur 6b ist eine weitere Anordnung gezeigt, bei der die Durchflußleitung 4 an einen Luftabscheider 2 angeschlossen ist, dessen Kopfraum mit einer Unterdruckquelle 10 in Verbindung steht. Die Abförderung der Flüssigkeit aus dem Luftabscheider 2 erfolgt über eine in der nachgeordneten Durchflußleitung 4b angeordnete zweite Pumpe 9. Insbesondere bei Anordnungen gemäß den Figuren 6a und 6b zeigen sich die Vorteile des neuen Verfahrens und der Vorrichtung zu seiner Durchführung. Bei diesen Anordnungen kann nämlich der statische Druck an der Entnahmestelle beim Leersaugen des Schlauches 4a von einem relativ niedrigen Druck während der stationären Überführungsphase bis auf Atmosphärendruck in der instationären Auslaufphase ansteigen. Die bei Vorrichtungen nach dem Stand der Technik durch diese Druckänderung gegebene Verfälschung der Teilstromentnahme ist, wie vorstehend erläutert, beträchtlich.

## Ansprüche

1. Verfahren zur Gewinnung von Flüssigkeitsproben, aus einer von einem ersten zu einem zweiten Behälter führenden Durchflußleitung, bei dem jeweils während der Überführung eines zu prüfenden Flüssigkeitsvolumens ein dem überführten Gesamtvolumen repräsentatives Volumen aus der Durchflußleitung abgezweigt, gesammelt und am Ende der Überführung dem gesammelten Volumen ein Teilvolumen als Probe entnommen wird, dadurch gekennzeichnet,
daß das abgezweigte Volumen aus der Durchflußleitung in an sich bekannter Weise in vom Staudruck abhängiger Menge fortlaufend entnommen wird, und daß der statische Druck im abgezweigten Volumen dem statischen Druck an der und über die Flüssigkeit in der Nähe der Entnahmestelle unverzüglich angeglichen wird, und zwar ohne druckausgleichsbedingten Flüssigkeitstransport in das oder aus dem abgezweigten Volumen.

2. Verfahren nach Anspruch 1, dadurch gekennzeichnet,
daß die Differenz der statischen Drücke an der Entnahmestelle und im abgezweigten Volumen in eine zur Druckangleichung nutzbare Stellgröße abgebildet wird.

3. Verfahren nach Anspruch 2, dadurch gekennzeichnet,
daß eine Änderung der Spiegeldifferenz einer Flüssigkeitsoberfläche, die mit der Flüssigkeit in der Nähe der Entnahmestelle kommuniziert und an der die Differenz der statischen Drücke an der Entnahmestelle und im abgezweigten Volumen angreift, als Stellgröße vorgesehen ist.

4. Verfahren nach Anspruch 3, dadurch gekennzeichnet,
daß eine Kompression oder Dekompression eines zwischen der Flüssigkeitsoberfläche und dem abgezweigten Volumen angeordneten Gasvolumens vorgesehen ist.

5. Verfahren nach Anspruch 4, dadurch gekennzeichnet,
daß der mit der Flüssigkeit in der Nähe der Entnahmestelle kommunizierende Flüssigkeitsbereich durch einen ihm innewohnenden Strömungsimpuls eine auf das abgezweigte Volumen wirkende Druckquelle steuert.

6. Verfahren nach Anspruch 4, dadurch gekennzeichnet,
daß der mit der Flüssigkeit in der Nähe der Entnahmestelle kommunizierende Flüssigkeitsbereich durch Auftriebswirkung an einem in ihm eintauchenden Körper eine auf das abgezweigte Volumen wirkende Druckquelle steuert.

7. Verfahren nach einem der Ansprüche 1 bis 6, dadurch gekennzeichnet,
daß der statische Druck an der Entnahmestelle durch einen bei einer Nenndurchflußleistung wertmäßig gleichen statischen Druck an einer geodätisch tieferliegenden Stelle stromabwärts substituiert wird.

8. Verfahren nach einem der Ansprüche 1 bis 7, dadurch gekennzeichnet,
daß das abgezweigte Volumen aus einem durch den Staudruck erzeugten Volumenstrom resultiert, der bemessen wird durch Aufteilung eines Teilstromes, der entweder gleichberechtigt oder ungleichberechtigt durchströmte Teilquerschnitte eines Gesamtquerschnittes durchsetzt.

9. Verfahren nach einem der Ansprüche 1 bis 7, dadurch gekennzeichnet,
daß das abgezweigte Volumen aus einem durch den Staudruck erzeugten Volumenstrom resultiert, der

EP 0 367 899 A1

bemessen wird durch Neigung eines vom erzeugten Volumenstrom durchsetzten Gesamtquerschnittes zur Strömungsrichtung eines Teilstromes der Durchflußleitung.

10. Verfahren nach Anspruch 9, dadurch gekennzeichnet,
daß der Gesamtquerschnitt zusätzlich quer zur Strömung in der Durchflußleitung verschoben wird.

11. Vorrichtung zur Durchführung des Verfahrens nach einem der Ansprüche 1 bis 10, mit einem Probenvorlaufgefäß, das über eine Zulaufleitung, die mit einer als Pitotrohr ausgebildeten Entrittsöffnung versehen ist, mit der Durchflußleitung in Verbindung steht, und das eine im Kopfraum des Probenvorlaufgefäßes ausmündende Druckausgleichsleitung aufweist, dadurch gekennzeichnet,
daß die Druckausgleichsleitung (6) in der Nähe der Entnahmestelle (I) an die Durchflußleitung (4) angeschlossen ist.

12. Vorrichtung nach Anspruch 11, dadurch gekennzeichnet,
daß die Druckausgleichsleitung (6) in den Kopfraum eines Behälters (17) ausmündet, und daß ein Tauchrohr (17b) vorgesehen ist, das in der Nähe der Entnahmestelle (I) an die Durchflußleitung (4) angeschlossen ist und in den unteren Bereich des Behälters (17) hinabreicht.

13. Vorrichtung nach Anspruch 12, dadurch gekennzeichnet,
daß an dem Behälter (17) ein über einen in diesem angeordneten Schwimmer (26) gesteuertes Belüftungsventil (27) vorgesehen ist, welches die Verbindung zu einer auf das abgezweigte Volumen wirkenden Druckquelle (14) steuert.

14. Vorrichtung nach Anspruch 11, dadurch gekennzeichnet,
daß die Durchflußleitung (4) hinter der Entnahmestelle (I) einen abwärts gerichteten Leitungsteil (4′) aufweist, an den eine aufsteigende, bis in den Kopfraum des Probenvorlaufgefäßes (3) hineinreichende, dessen Füllstand begrenzende Druckausgleichsleitung (6) angeschlossen ist.

15. Vorrichtung nach Anspruch 12 oder 14, dadurch gekennzeichnet,
daß ein Druckmeßgerät (12) im Bereich der Entnahmestelle (I) vorgesehen ist, das über die Auslenkung einer Membrane (12a), die einerseits vom statischen Druck der Flüssigkeit an der Entnahmestelle (I) und andererseits vom statischen Druck über dem bzw. im abgezweigten Volumen im Probenvorlaufgefäß (3) mittels einer zweiten Druckausgleichsleitung (24) beaufschlagt ist, eine an den Kopfraum des Probenvorlaufgefäßes (3) angeschlossene Druckquelle (14) steuert.

16. Vorrichtung nach Anspruch 14, dadurch gekennzeichnet,
daß die Druckausgleichsleitung (6) auf der Seite zur Durchflußleitung (4′) in den Kopfraum eines Behälters (17) ausmündet, der an seiner Unterseite mit einem Anschluß (17a) an die Durchflußleitung (4′) angeschlossen ist, wobei sein Durchtrittsquerschnitt jenem der Durchflußleitung (4′) entspricht.

17. Vorrichtung nach Anspruch 16, dadurch gekennzeichnet,
daß das Probenvorlaufgefäß (3) und der Behälter (17) in einem gemeinsamen Behältermantel (3d) angeordnet sind, und ihre gegenseitige Trennung über einen Trennboden (3c) erfolgt.

18. Vorrichtung nach Anspruch 16 oder 17, dadurch gekennzeichnet,
daß der Kopfraum des Behälters (17) über ein schwimmergesteuertes Ventil (18) mit der Atmosphäre verbunden wird.

19. Vorrichtung nach Anspruch 16 oder 17, dadurch gekennzeichnet,
daß der Kopfraum des Behälters (17) über ein durch den Strömungsimpuls der Flüssigkeit im Behälter (17) gesteuertes Ventil (19) mit der Atmosphäre verbunden wird.

10

526SW14

I

$c_I$ →

II

6

5

4

$c_{Pr}$

3

3a

Fig.1a

I

$c_I$ →                    → $c_I$

5

6      II      4

$c_{Pr}$

3

Fig.1b

I      4      5      $\zeta_{I-II}$

$c_I$ →

3b

$c_{Pr}$

3

$4^{*}$

$h_{geod}$

$c_I$

6      II

Fig.1c

Fig.2

Fig.3

Fig.4

Fig.4a

Fig.5a

Fig.5b

Fig.5c

Fig.5d

Fig.6

Fig.6a

Fig.6b

Fig. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-1 363 478 (REINHOLD et al.) * Seite 4, rechte Spalte, Absatz 2; Seite 5, Resünee; Figuren 1,4 * & DE-A-1 224 522 (Kat. D) --- | 1,11 | G 01 N 1/20 |
| A | GB-A-2 162 647 (BRITISH NUCLEAR FUELS) * Seite 1, Zeilen 3-72; Fig. * --- | 1,11,13 ,15 | |
| A | US-A-4 082 004 (WEBER et al.) * Zusammenfassung; Spalte 4, Zeilen 25-36; Figuren 1,4 * ----- | 1,10,11 | |

RECHERCHIERTE SACHGEBIETE (Int. Cl.5)

G 01 N 1/00
A 01 J 5/00

Der vorliegende Recherchenbericht wurde für alle Patentansprüche erstellt

| Recherchenort | Abschlußdatum der Recherche | Prüfer |
|---|---|---|
| DEN HAAG | 08-02-1990 | MILLS J. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
 
& : Mitglied der gleichen Patentfamilie, übereinstimmendes Dokument